# EUROPÄISCHE PATENTANMELDUNG

(11) **EP 2 273 252 A1**
(43) Veröffentlichungstag der Anmeldung: **12.01.2011**
(21) Anmeldenummer: 09009075.4
(22) Anmeldetag: 10.07.2009
(51) Int. Cl.: G01N 3/12, G01M 3/08, G01M 3/28

(54) **Verfahren zur zerstörungsfreien Innendruckprüfung von Hohlkörpern sowie Prüf-Vorrichtung**

(71) Anmelder: Krause & Maier GbR, 88361 Altshausen (DE)
(72) Erfinder: Maier, Manuel, D- 88213 Ravensburg (DE)
(74) Vertreter: Engelhardt, Volker

(57) **Zusammenfassung**

Bei einem Verfahren zur zerstörungsfreien Innendruckprüfung von Hohlkörpern (5), insbesondere von Rohren, mittels einer in dem Inneren des Hohlkörpers (5) eingefüllten Prüfflüssigkeit (4) soll der Prüfzyklus pro zu überprüfenden Hohlkörper (5) minimiert sein, und durch die erfindungsgemäß physikalischen Maßnahmen soll sichergestellt sein, dass die im Inneren des Hohlkörpers (5) vorhandene Luft vollständig aus diesem entweicht, um die Unfallgefahr auszuschließen.

Dieser nachfolgend ablaufenden Verfahrensablauf ist durch die Verfahrensschritte
- Einbringen des Hohlkörpers (5) in ein mit der Prüfflüssigkeit (4) gefülltes Becken (2),
- Verschließen der beiden offenen Stirnseiten (9, 10) des jeweiligen Hohlkörpers (5) mit einer Druckplatte (16, 21) nachdem der Hohlkörper (5) vollständig mit Prüfflüssigkeit (4) gefüllt ist,
- Erzeugen eines durch die Prüfflüssigkeit (4) ausgeübten Überdrucks im Inneren des Hohlkörpers (5), gekennzeichnet.

## Beschreibung

Die Erfindung bezieht sich auf ein Verfahren zur Innendruckprüfung von Hohlkörpern nach dem Oberbegriff des Patentanspruches 1 sowie auf eine Prüf-Vorrichtung.

Zur Förderung von großen Volumenströmen, beispielsweise Erdgas oder Erdöl, über große Entfernungen ist es erforderlich, möglichst groß bemessene Hohlkörper, insbesondere Rohre, zur Verfügung zu stellen. Um zu erkennen, ob die Rohre die geforderte Festigkeit aufweisen ist es erforderlich, diese Hohlkörper vor deren Einsatz in Pipelines auf die geforderte Festigkeit zu überprüfen. Bei einer solchen Prüfung handelt es sich üblicherweise um ein normiertes Prüfverfahren. Die zu überprüfenden Hohlkörper müssen über einen bestimmten Zeitraum mit einem Innendruck belastet werden, durch den die Rohrwandung bis zur geforderten Streckgenze des jeweiligen Rohrwerkstoffs oder darüber hinaus gedehnt wird.

Tritt während des Prüfverfahrens ein Druckabfall auf, ist das Rohr vor Erreichen der geforderten Streckgrenze überdehnt worden und es erfüllt nicht die geforderten Festigkeitseigenschaften. Erst wenn dieses Prüfverfahren abgeschlossen ist, kann das jeweilige Rohr in die Pipeline eingebaut werden.

Die bekannten Prüfverfahren verwenden dabei ein Aufnahmegestell, in dem das Rohr eingesetzt und an den beiden offenen Stirnseiten verschlossen wird. Eine der beiden die Stirnseiten abdichtenden Druckplatten weist eine Einfüllleitung auf, durch die anschließend die Prüfflüssigkeit, vorzugsweise Wasser, in das Innere des Hohlkörpers gepumpt wird. Die in dem Inneren des Hohlkörpers vorhandene Luft gelangt über ein an der Druckplatte vorgesehenes Überdruckventil nach außen, so dass nach einer gewissen Zeit das Innere des Hohlkörpers vollständig mit der Prüfflüssigkeit angefüllt ist.

Um nunmehr den Hohlkörper auf Festigkeit zu überprüfen, wird weiter Prüfflüssigkeit in das Innere des Hohlkörpers eingefüllt, bis der normierte Prüfdruck erreicht ist. Dieser Prüfdruck wird über einen bestimmten Zeitraum gehalten. Erweist sich das Rohr als standfest, kann dieses in Pipelines verbaut werden; anderenfalls ist das Rohr für die Verwendung in Pipelines nicht geeignet.

Als nachteilig bei diesem Stand der Technik hat sich herausgestellt, dass der Prüfzyklus einen erheblichen Zeitaufwand pro zu überprüfenden Hohlkörper bedarf, denn zunächst ist das gesamte Volumen des Hohlkörpers mit Wasser oder Prüfflüssigkeit aufzufüllen. Auch wenn Zuflussleitungen mit einer großen Querschnittsfläche verwendet werden, dauert es bis zu 10 Minuten bis das Volumen des derzeit bekannten Hohlkörpers mit Prüfflüssigkeit angereichert ist; zukünftig gelangen Hohlkörper zum Einsatz, deren Durchmesser etwa doppelt so groß bemessen ist, als dies für die bekannten Pipeline-Rohre bislang möglich ist.

Des Weiteren ist ein solcher Fördervorgang mit einem erheblichen Energieaufwand verbunden, denn die die Prüfflüssigkeit fördernde Niederdruckpumpe muss das Wasser mit sehr großem Volumenstrom fördern. Nach dem Befüllen der Rohre wird der Prüfdruck mit einer Hochdruckpumpe mit relativ geringen Volumenstrom erzeugt. Die Standzeiten der verwendeten Pumpen sind zu dem begrenzt, so dass nach einer bestimmten Betriebsdauer die Pumpen auszutauschen sind.

Die oft noch vorhandene Luft im Prüfkörper, stellt darüber hinaus ein sehr großes Sicherheitsrisiko dar, da bei den vorhandenen Prüfdrücken von bis zu 100 MPa die Luft sehr stark komprimiert wird, und dadurch sehr große Energie gespeichert wird. Beim Bersten eines schadhaften Rohres, expandiert die eingeschlossene Luft und setzt die gespeicherte Energie schlagartig frei. Wenn derartige Unfälle geschehen, sind die im Umkreis des Hohlkörpers möglicherweise vorhandenen Menschen in Lebensgefahr. Durch die Explosionskraft können nämlich die Druckplatten weggesprengt werden, die bereits mehrfach Menschen verletzt oder gar tödlich verwundet haben. Aufgrund der enormen Druckbelastungen im Inneren des Hohlkörpers lassen sich derartige Unfälle ausschließlich dadurch vermeiden, dass entweder im Inneren des Hohlkörpers keine Lufteinschlüsse vorhanden sind. Ein solcher Gefahrenausschluss ist jedoch unmöglich; die Beherrschung solcher Explosionskräfte erfordert daher das vollständige Entlüften des Hohlkörpers. Dieser Vorgang ist zeit- und kostenintensiv.

Des Weiteren ist nachteilig, dass die bekannten Prüfvorrichtungen lediglich für eine bestimmte Größe von zu überprüfenden Hohlkörpern praktikabel einsetzbar sind. Je größer nämlich das Volumen eines Hohlkörpers wird, desto länger benötigt die Pumpe, das Innere des Hohlkörpers mit Prüfflüssigkeit anzufüllen und desto mehr Energiebedarf für den Betrieb der Pumpe besteht.

Es ist daher Aufgabe der Erfindung, ein Verfahren zur Dichtigkeitsprüfung von Hohlkörper sowie eine Prüf-Vorrichtung zur Durchführung des Verfahrens zu Verfügung zu stellen, durch die der Prüfzyklus pro zu überprüfenden Hohlkörpern minimiert und durch das oder durch die aufgrund von physikalischen Maßnahmen sichergestellt ist, dass die im Inneren des Hohlkörpers vorhandene Luft vollständig aus diesem entweicht, um die Unfallgefahr auszuschließen.

Diese Aufgaben werden erfindungsgemäß durch die im kennzeichnenden Teil des Patentanspruches 1 aufgeführten Merkmale sowie durch die Merkmale des Patentanspruches 8 gelöst.

Weitere vorteilhafte Weiterbildungen der Erfindung ergeben sich aus den Unteransprüchen.

Dadurch, dass der oder die Hohlkörper in ein mit Prüfflüssigkeit gefülltes Becken eingetaucht wird, entfällt zunächst die technische Notwendigkeit, das Innere des Hohlkörpers mittels einer Niederdruckpumpe mit Prüfflüssigkeit anzufüllen. Es ist dabei besonders vorteilhaft, wenn das Becken in Form einer schiefen Ebene ausgebildet ist, denn dadurch kann das Rohr mittels der auf dieses einwirkende Schwerkraft in das Becken eingetaucht werden, so dass lediglich zum Herausziehen des Rohres ein entsprechender Antrieb notwendig ist. Durch die Verwendung eines Gegengewichtes kann zudem die Energie für den Antrieb reduziert werden. Der Wegfall der energieintensiven Niederdruckpumpe ergibt sowohl bei den Anschaffungskosten, in der Wartungs- und in der Energieeffizienz ein großes Einsparpotential. Alleine durch die Energieeinsparung amortisiert sich die Anlage in wenigen Jahren. Somit wird durch das erfindungsgemäße Prüfverfahren und die erfindungsgemäße Prüf-Vorrichtung eine erhebliche Energieeinsparung erzielt.

Des Weiteren ist durch das Eintauchen des Hohlkörpers in das mit Prüfflüssigkeit gefüllte Becken gewährleistet, dass das Innere des Hohlkörpers vollständig evakuiert wird, denn die einströmende Prüfflüssigkeit drückt die Luft aus dem Rohr und erst wenn diese vollständig entwichen ist, werden die beiden offenen Stirnseiten des Rohres flüssigkeitsdicht verschlossen. Somit kann die Unfallgefahr erheblich minimiert werden, denn die schlagartige Expansion der Luft findet nicht statt, da Luftbläschen in diesem nicht vorhanden sind, und die Prüfflüssigkeit als nicht kompressibles Medium keine Energie speichern kann. Die Einzige freizusetzende Energie ist die, die in der elastischen Dehnung des Rohres gespeichert ist. Diese wird durch das im Becken befindliche Wasser ausreichend gedämpft.

Des Weiteren ist vorteilhaft, dass das Innere des Hohlkörpers sehr rasch mit Prüfflüssigkeit aufgefüllt ist, denn durch die Förderbewegungen der Hohlkörper wird bereits dessen inneres Volumen mit Prüfflüssigkeit angefüllt. Zudem strömt die Prüfflüssigkeit über den gesamten Querschnitt des Hohlkörpers in dessen Inneres, so dass unabhängig von dessen Größenverhältnissen, eine Anreicherung mit Prüfflüssigkeit innerhalb einer kurz bemessenen Zeitspanne erfolgt.

In der Zeichnung ist ein erfindungsgemäßes Ausführungsbeispiel dargestellt, das nachfolgend näher erläutert wird. Im Einzelnen zeigt:

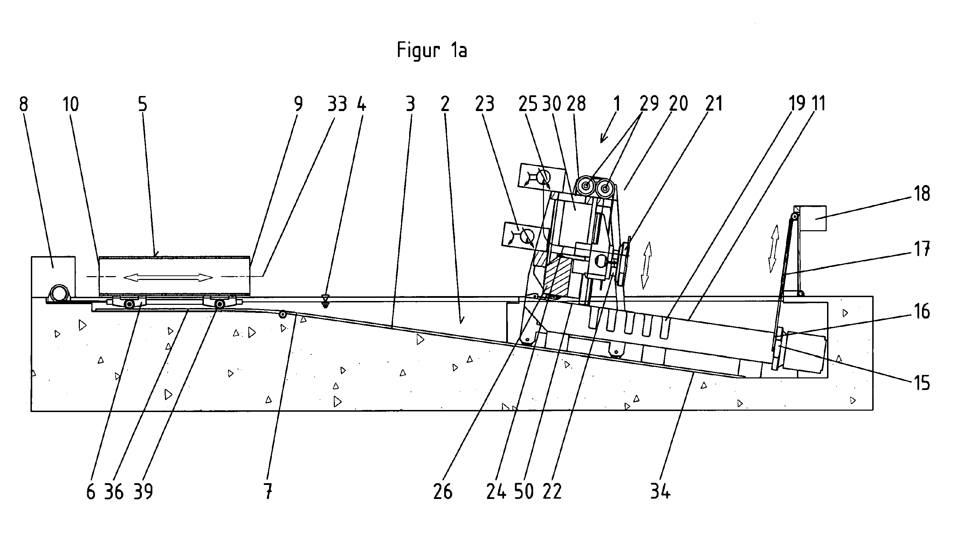

- Figur 1a: eine Prüf-Vorrichtung, bestehend aus einem mit Prüfflüssigkeit gefüllten Becken in das ein auf einem Fahrgestell montierter Hohlkörper einge- taucht wird, im Ausgangszustand,

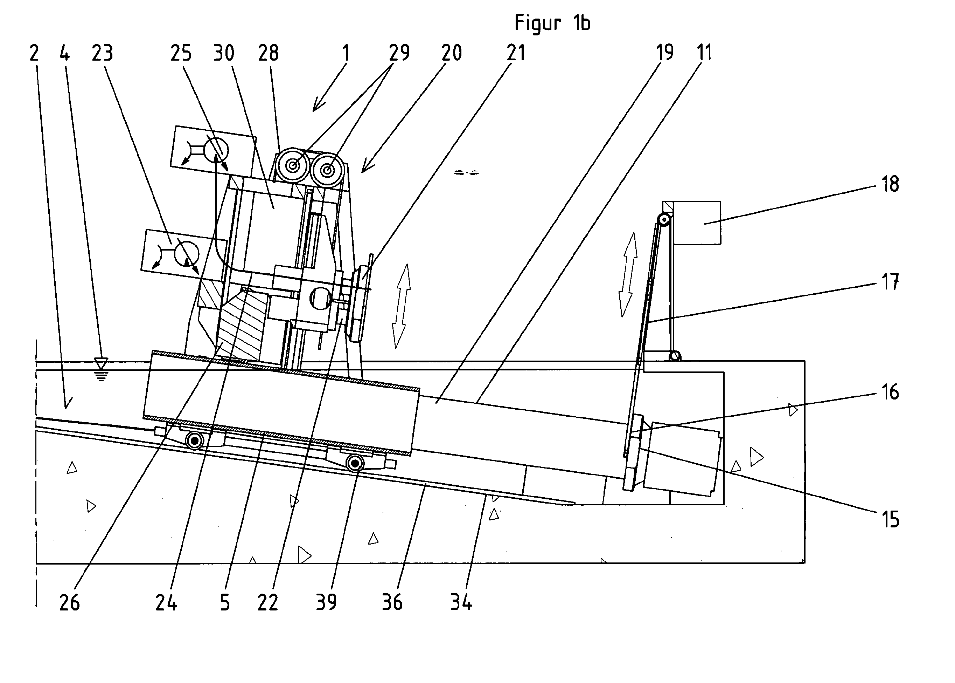

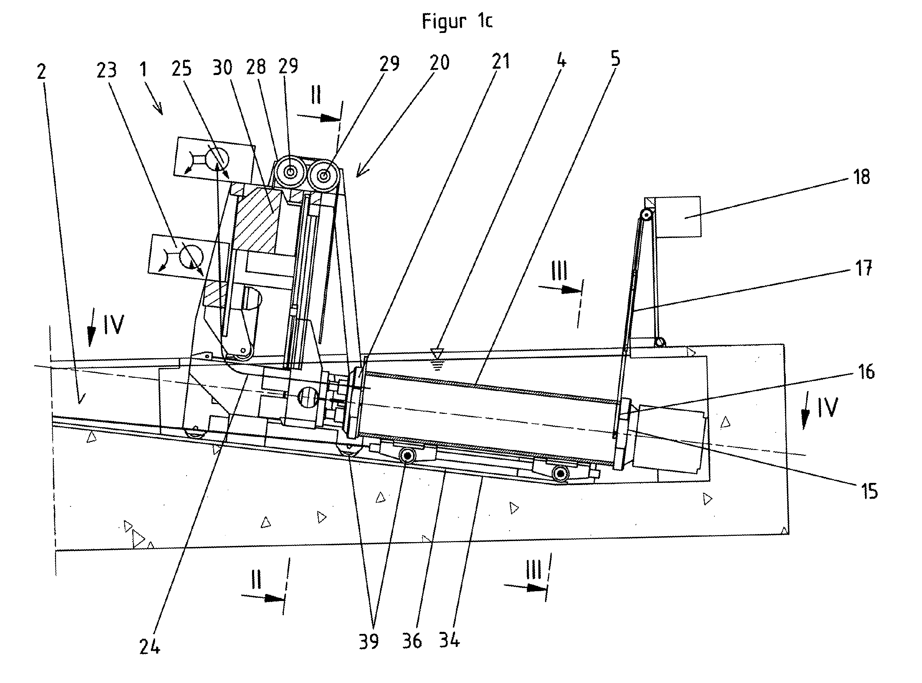

- Figur 1 b: die Prüf-Vorrichtung gemäß Figur 1 a, während diese durch ein Ver- schlussmechanismus in ein in dem Becken angeordnetes U-förmiges Aufnahmegestell gelegt ist.
- Figur 1 c: die Prüf-Vorrichtung gemäß Figur 1 b nachdem das Fahrgestell und der auf dieses befestigte Hohlkörper die Prüfposition im Becken erreicht hat, in der der Hohlkörper durch den Verschlussmechanismus flüssig- keitsdicht verschlossen ist,
- Figur 2a: den Verschlussmechanismus gemäß Figur 1 c entlang der Schnittlinie II-II,
- Figur 2b: eine andersartig ausgestaltete Beckenform gemäß Figur 2a,

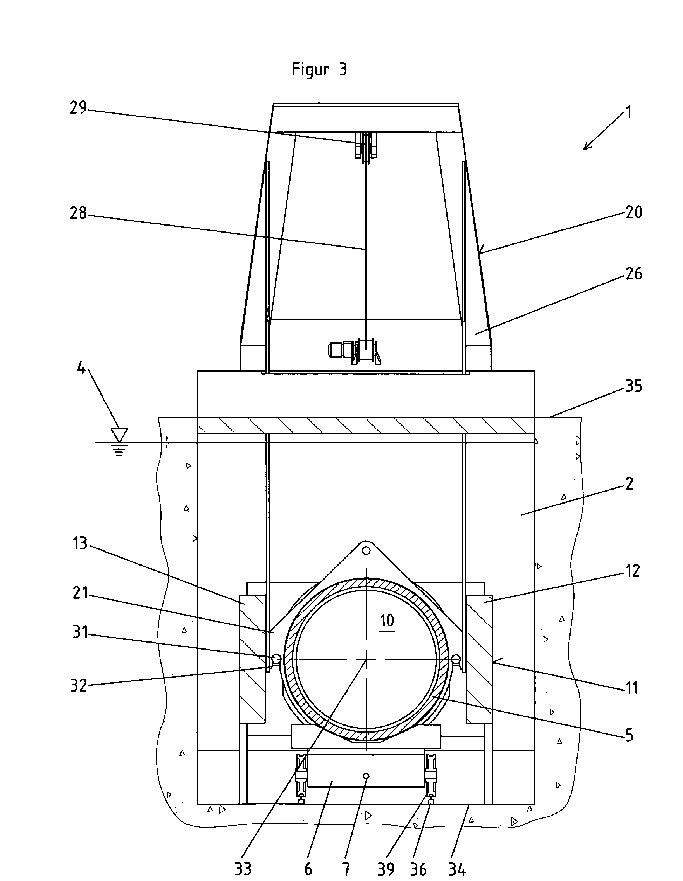

- Figur 3: einen in dem Becken vorgesehenen Anschlag an den der Hohlkörper flüssigkeitsdicht anliegt, entlang der Schnittlinie III-III gemäß Figur 1c,
- Figur 4: die Prüf-Vorrichtung gemäß Figur 1c entlang der Schnittlinie IV-IV,
- Figur 5: eine andersartig Ausgestaltung der Prüf-Vorrichtung gemäß Figur 1 c, bestehend aus einer Hebevorrichtung, durch die der Hohlkörper in das Becken geneigt verlaufend eingetaucht wird,
- Figur 6a: eine andersartige Ausgestaltung des Beckens, in der die Prüf- Vorrichtung gemäß Figur 5 eingesetzt ist,
- Figur 6b: das Becken gemäß Figur 6a entlang der Schnittlinie VIb-VIb,
- Figur 7: die Prüf-Vorrichtung gemäß Figur 1 c, in der der Verschlussmechanis- mus und der Anschlag der jeweils anderen offenen Stirnseite des Hohl- körpers zugeordnet sind,
- Figur 8a: die Prüf-Vorrichtung gemäß Figur 7 im Ausgangszustand,
- Figur 8b: die Prüf-Vorrichtung gemäß Figur 7 während des Prüfzustandes,
- Figur 9: die Prüf-Vorrichtung gemäß Figur 8b entlang der Schnittlinie IX-IX und
- Figur 10: die Prüf-Vorrichtung gemäß Figur 9 entlang der Schnittlinie X-X.

Aus den Figuren 1a, 1b und 1c kann zunächst der Verfahrensablauf zum Befüllen eines in Form eines Rohres ausgebildeten Hohlkörpers 5 mit Prüfflüssigkeit 4 in einer Prüf-Vorrichtung 1 entnommen werden. Die Prüf-Vorrichtung 1 umfasst dabei ein Becken 2, in dem die Prüfflüssigkeit 4 eingefüllt ist. Das Becken 2 mündet in eine aus der horizontalen geneigt verlaufenden Rampe 3 und besteht aus einem Beckenboden 34, dessen Neigungswinkel mit der Rampe 3 identisch ist und aus einem Beckenrand 35.

In die Rampe 3 und den Beckenboden 34 sind zwei parallel zueinander ausgerichtete Laufschienen 36 eingebaut, auf die ein Fahrgestell 6 aufgesetzt ist, das über einen Seilzug 7 mit einem Motor 8 verbunden ist. Durch das Fahrgestell 6 werden die Rohre 5 seitlich abgestützt, so dass diese aus dem Fahrgestell 6 nicht herausrollen können. Durch den Motor 8 wird das Fahrgestell 6 in Richtung des Beckens 2 bewegt. Sobald das Fahrgestell 6 die Rampe 3 erreicht hat, wird dieses durch die auf das Fahrgestell 6 und das Rohr 5 einwirkende Schwerkraft in Richtung des Beckens 2 gezogen.

Das Rohr 5 weist zwei offene Stirnseiten 9 und 10 auf. Die dem Becken 2 zugewandte Stirnseite 9 erreicht die Prüfflüssigkeit 4 als erstes und taucht in diese ein, so dass, wie dies insbesondere der Figur 1b zu entnehmen ist, das Innere des Rohres 5 gleichmäßig und über den gesamten Innenquerschnitt mit Prüfflüssigkeit 4 angefüllt wird, ohne dass hierfür zusätzliche Hilfsmittel, wie beispielsweise Förderpumpen oder dergleichen, erforderlich sind. Die im Inneren des Rohres 5 vorhandene Luft entweicht dabei aus der dem Becken 2 abgewandten Stirnseite 10. Durch diesen Eintauchvorgang ist somit zunächst gewährleistet, dass die Luft vollständig aus dem Inneren des Rohres 5 evakuiert ist, wenn dieses vollständig in der Prüfflüssigkeit 4 eingetaucht ist. Des Weiteren wird für die Evakuierung des Innenraumes des Rohres 5 keine zusätzliche Energie für den Antrieb einer Förderpumpe benötigt.

Die Prüf-Vorrichtung 1 besteht darüber hinaus aus einem in dem Becken 2 angeordneten und dort fest montierten Aufnahmegestell 11. Das Aufnahmegestell 11 besteht aus zwei parallel und beabstandet zueinander verlaufenden Schenkeln 12 und 13, die über einen Steg 14 miteinander fixiert sind. Die Querschnittskontur des Aufnahmegestelles 11 ist folglich U-förmig ausgestaltet. Die offene Seite des Aufnahmegestelles 11 ist der Rampe 3 und dem Fahrgestell 6 zugewandt, so dass dieses zusammen mit dem auf dem Fahrgestell 6 montierten Rohr in das Aufnahmegestell 11 eingeschoben werden kann. In diesem Zustand, der in der Figur 1c abgebildet ist, ist das Rohr 5 vollständig mit Prüfflüssigkeit 4 befüllt. Folglich können die beiden offenen Stirnseiten 9 und 10 flüssigkeitsdicht verschlossen werden.

Dies erfolgt derart, dass das Fahrgestell 6 und damit das Rohr 5, unmittelbar bevor dieses einen an dem Steg 14 angeformten Anschlag 15 berührt, mit einer Druckplatte 16 verschlossen wird. Der Anschlag 15 ist dabei dem Rohr 5 und dem Fahrgestell 6 zugewandt. Folglich wird das Fahrgestell 6 durch den Seilzug 7 heruntergelassen. Zwischen der offenen Stirnseite 9 des Rohres 5 und dem Anschlag 15 des Aufnahmegestelles 11 befindet sich die Druckplatte 16 die zum Wechseln von oben eingesetzt wird. Die Kontur der Druckplatte 16 ist dabei an die Kontur und den Durchmesser des Rohres 9 angepasst und korrespondiert mit diesem. Im Bereich der Wandung des Rohres 5 sind an der Druckplatte 16 Kunststoff- oder Metalldichtungen angeformt, die auf die Wand des Rohres 5 aufliegen. Die Druckplatte 16 ist an einer Zugvorrichtung 17 befestigt, die über einen Motor 18 angetrieben ist. Folglich kann die Druckplatte 16 angehoben bzw. abgesenkt werden.

Sobald die Druckplatte 16 in der korrekten Position bezüglich der offenen Stirnseite 9 des Rohres 5 ausgerichtet ist, wird das Fahrgestell 6 in Richtung des Anschlages 15 verfahren, so dass aufgrund der herrschenden Schwerkraft des Rohres 5 eine Anpresskraft auf die Druckplatte 16 einwirkt, die demnach zwischen der offenen Stirnseite 9 und dem Anschlag 15 verspannt gehalten ist.

In den beiden Schenkeln 12 und 13 des Aufnahmegestelles 11 sind eine Vielzahl von Nuten 19 eingearbeitet, die fluchtend zueinander ausgerichtet sind. Die Nuten 19 verlaufen dabei senkrecht zu der Längsachse 33 des Rohres 5 und sind in Richtung der Oberfläche der Prüfflüssigkeit 4 offen ausgebildet. Die Längen der zu überprüfenden Rohre 5 können nämlich unterschiedlich bemessen sein, so dass verschiedene Längen von Rohren 5 in einer andersartigen Endposition bezüglich des Aufnahmegestells 11 liegen. Diese Endposition wird durch die offene Stirnseite 10 des Rohres 5 bestimmt, so dass ein Verschlussmechanismus 20, der gouillotinenartig ausgebildet ist, im Bereich der offenen Stirnseite 10 angeordnet ist.

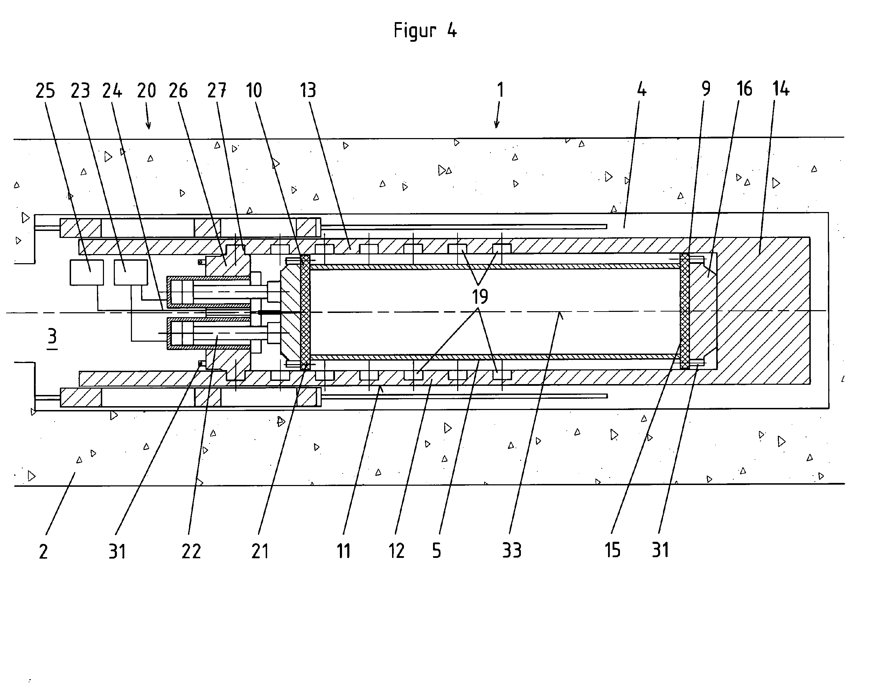

Der Verschlussmechanismus 20 besteht dabei aus einem Rahmengestell 26, an dem seitlich abstehend zwei Bolzen 27 angeformt sind. Sobald daher der Verschlussmechanismus 20 abgesenkt wird, werden die Bolzen 27 in die Nuten 19 eingeschoben, die der offenen Stirnseite 10 am nächsten liegen. Dies ist in Figur 4 ersichtlich. Der Verschlussmechanismus 20 kann demnach verfahren werden.

Der Verschlussmechanismus 20 umfasst des Weiteren vier Druckkolben 22, die an dem Rahmengestell 26 abgestützt sind und durch die eine Druckplatte 21 gehalten ist. Sobald die Druckplatte 21 im Bereich der offenen Stirnseite 10 verläuft, wird über eine mit den Druckkolben 22 in Wirkverbindung stehende Pumpe 23 eine Anpresskraft erzeugen, durch die die Druckplatte 21 auf die offene Stirnseite 10 des Rohres 5 aufgedrückt ist. Die vier Druckkolben können dadurch eine beliebige Anzahl von Druckkolben 22, beispielsweise eins, zwei oder dgl., ersetzt werden.

In die Druckplatte 21 ist eine Prüfleitung 24 eingearbeitet, durch die die Prüfflüssigkeit 4 von einer Pumpe 25 in das Innere des Rohres 5 eingepresst wird, sobald die beiden offenen Stirnseiten 9 und 10 flüssigkeitsdicht verschlossen sind. Durch die Pumpe 25 wird somit im Inneren des Rohres 5 ein Überdruck erzeugt, der eine Belastung der Rohrwand bis zur Streckgrenze erzeugt, nämlich bis zu 100 MPa, und zwar abhängig von den Rohrdurchmessern und deren Wanddicken. Der Druck wird über einen bestimmten Zeitraum aufrechtgehalten. Fällt der Druck ab, ist das Rohr über die Streckgrenze gedehnt worden und somit fehlerhaft.

Sobald der Verschlussmechanismus 20 über die beiden Bolzen 27 in die Nuten 19 der Schenkel 12 oder 13 des Aufnahmegestelles 11 eingeschoben ist, entsteht ein vollständig geschlossener rechteckförmiger Rahmen. Demnach ist der Verschlussmechanismus 20 formschlüssig mit dem Aufnahmegestell 11 verbunden und die im Inneren des Rohres 5 wirkenden Druckkräfte werden durch das Aufnahmegestell 11 aufgenommen.

Des Weiteren ist der Figur 4 zu entnehmen, dass seitlich an der Druckplatte 16 bzw. 21 zwei Haltebolzen 31 angeformt sind, die als Arretierhilfen für die jeweilige Druckplatte 16 bzw. 21 dienen, denn an den Druckplatten 16 oder 21 sind U-förmige Aufnahmetaschen 32 angearbeitet, in die die Haltebolzen 31 eintauchen und somit die jeweilige Druckplatte 16 bzw. 21 zusätzlich fixieren und führen.

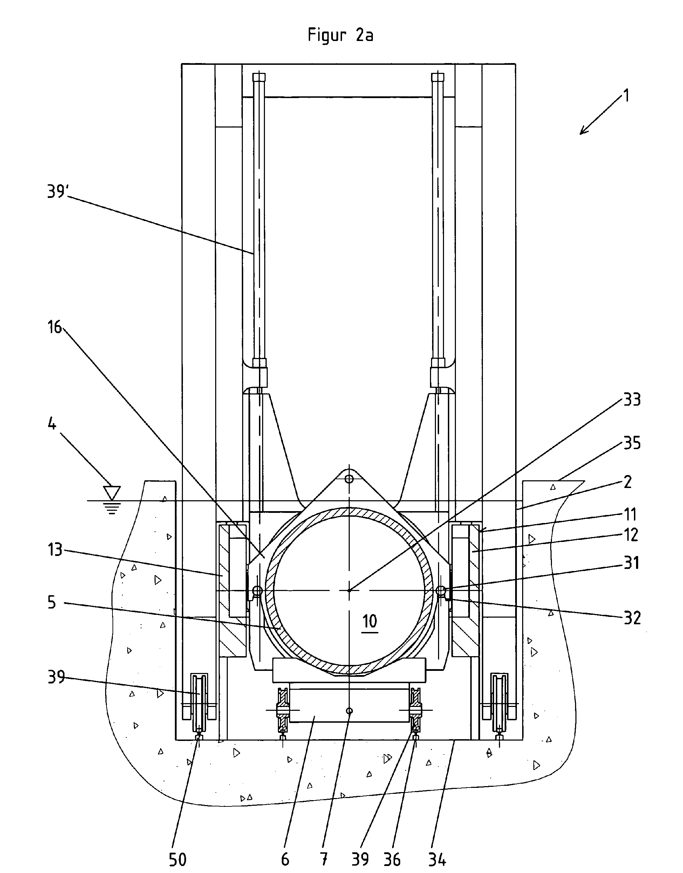

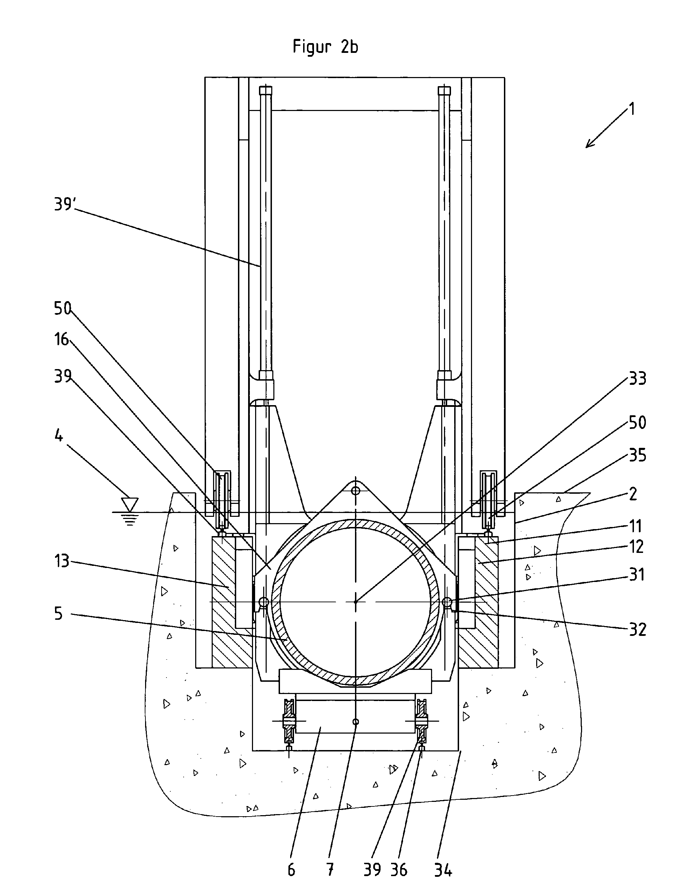

In Figur 2b ist im Gegensatz zu Figur 2a abgebildet, dass der Verschlussmechanismus 20, der über in den Schienen 39 geführte Laufrollen 50 in Richtung der offenen Stirnseite 10 verfahrbar ist, um diesen möglichst nahe im Bereich der offenen Stirnseite 10 zu positionieren, auf dem Beckenrand 35 bewegt ist, so dass das Innere des Beckens 2 wesentlich kleiner ausgebildet werden kann.

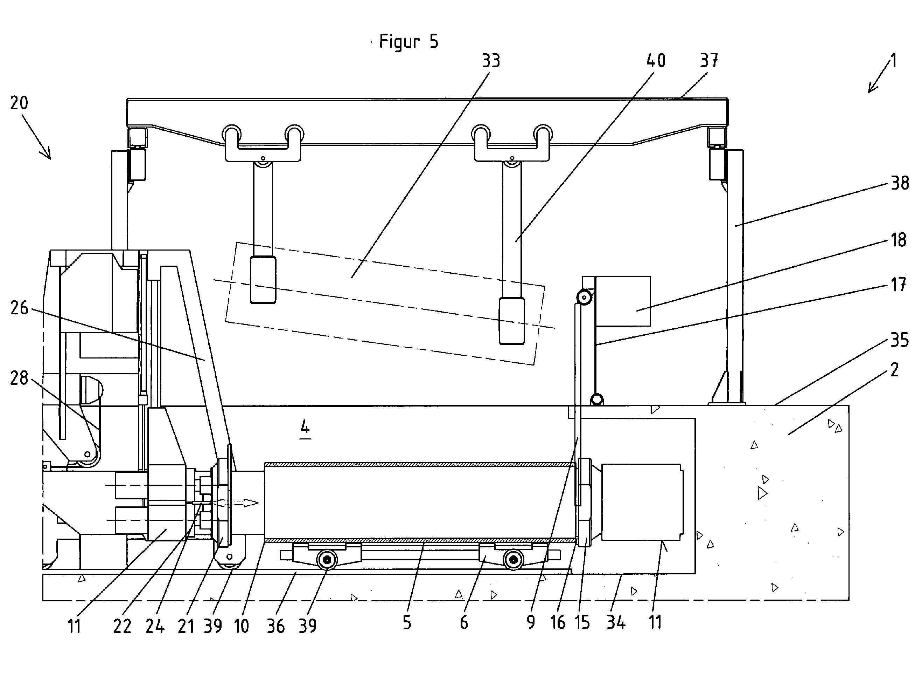

Durch Figur 5 wird eine andere Möglichkeit gezeigt, wie das Rohr 5 in das Becken 2 eingetaucht werden kann. Zu diesem Zweck ist auf den Beckenrand 35 eine Hebeeinrichtung 37 in Form eines Portalkranes aufgestellt. An einem Gestell 38 der Hebeeinrichtung 37 sind verfahrbar Aufnahmehaken 40 vorgesehen, durch die das Rohr 5 in Richtung der Prüfflüssigkeit 4 geneigt verlaufend gehalten ist. Somit taucht das Rohr 5 schräg in die Prüfflüssigkeit 4 ein, so dass die im Inneren des Rohres 5 vorhandene Luft schneller entweicht, als wenn das Rohr 5 parallel zu der Oberfläche der Prüfflüssigkeit 4 bewegt ist. Der Beckenboden 34 verläuft horizontal; eine Neigung des Beckenbodens 34 ist in dieser Ausführungsvariante nicht erforderlich.

Dem Beckenboden 34 ist nunmehr das Fahrgestell 6 zugeordnet, auf das das Rohr 5 durch die Hebeeinrichtung 37 aufgesetzt wird. Folglich kann das Rohr 5 im Inneren des Beckens 2 geringfügig nach rechts oder links verfahren werden, um dieses durch den Verschlussmechanismus 20 auf den Anschlag 15 und damit auf die Druckplatte 16 zu drücken.

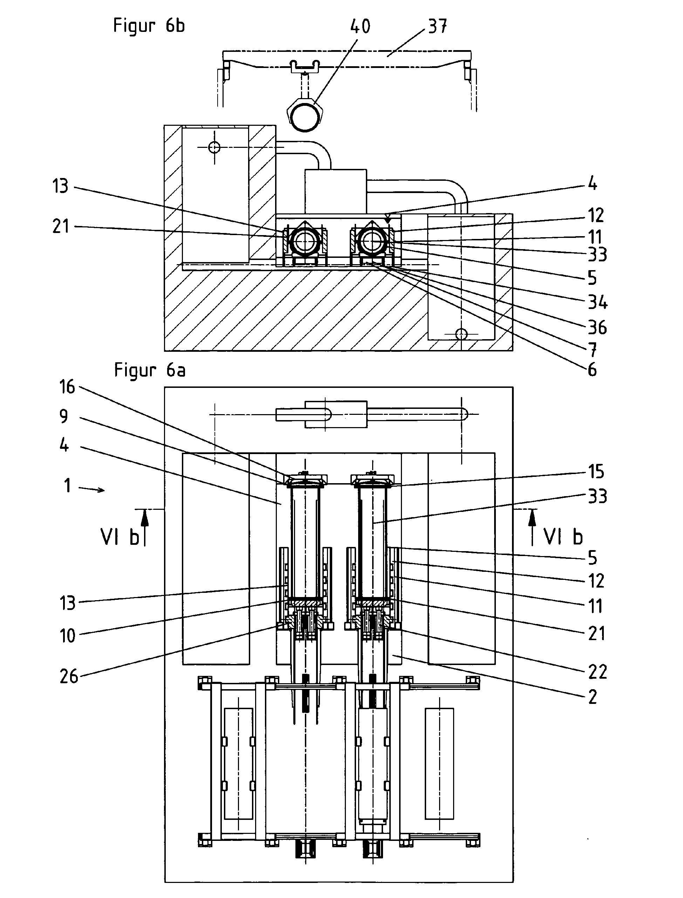

In den Figuren 6a und 6b ist eine weitere Ausführungsvariante der Prüf-Vorrichtung 1 abgebildet, denn nunmehr sollen zwei Rohre 5 gleichzeitig in das Innere des Beckens 2 eingebracht werden können und falls dies von einem Anwender der Prüf-Vorrichtung 1 gewünscht wird, soll die die Rohre 5 umgebende Prüfflüssigkeit 4 abgepumpt werden. Zu diesem Zweck befinden sich seitlich neben dem Becken 2 zwei Aufnahmebecken 51 und 52, die in unterschiedlichen Höhenniveaus verlaufen. Dabei ist das Aufnahmebecken 51 am niedrigsten und das Aufnahmebecken 52 am höchsten angeordnet, so dass das Becken 2 mit der Prüfflüssigkeit 4 zwischen diesen beiden Aufnahmebecken 51 und 52 verläuft. Sobald die Rohre 5 in das Becken 2 eingesetzt sind und diese vollständig mit Prüfflüssigkeit 4 gefüllt worden sind, wird aus dem Becken 2 die Prüfflüssigkeit 4 in das Aufnahmebecken 51 abgeleitet. Hierfür ist keine Pumpe notwendig, denn aufgrund der Schwerkraft fließt die Prüfflüssigkeit 4 ohne weitere Hilfsmittel in das Aufnahmebecken 51.

Während des Prüfzyklusses für die Rohre 5 wird die Prüfflüssigkeit 4 von dem Aufnahmebecken 51 in das Aufnahmebecken 52 mittels einer Pumpe gefördert. Sobald der Prüfzyklus für die Rohre 5 abgeschlossen ist, werden die beiden Druckplatten 16 bzw. 21 von den offenen Stirnseiten 9 und 10 entfernt, so dass das im Inneren der Rohre 5 vorhandene Wasser aus diesen in das Becken 2 zurückströmt.

Während zwei neue zu prüfende Rohre 5 in das Becken 2 eintauchen, wird die Prüfflüssigkeit 4 aus dem Aufnahmebehälter 52 in das Becken 2 geleitet, so dass dieses wieder vollständig mit Prüfflüssigkeit 4 gefüllt ist.

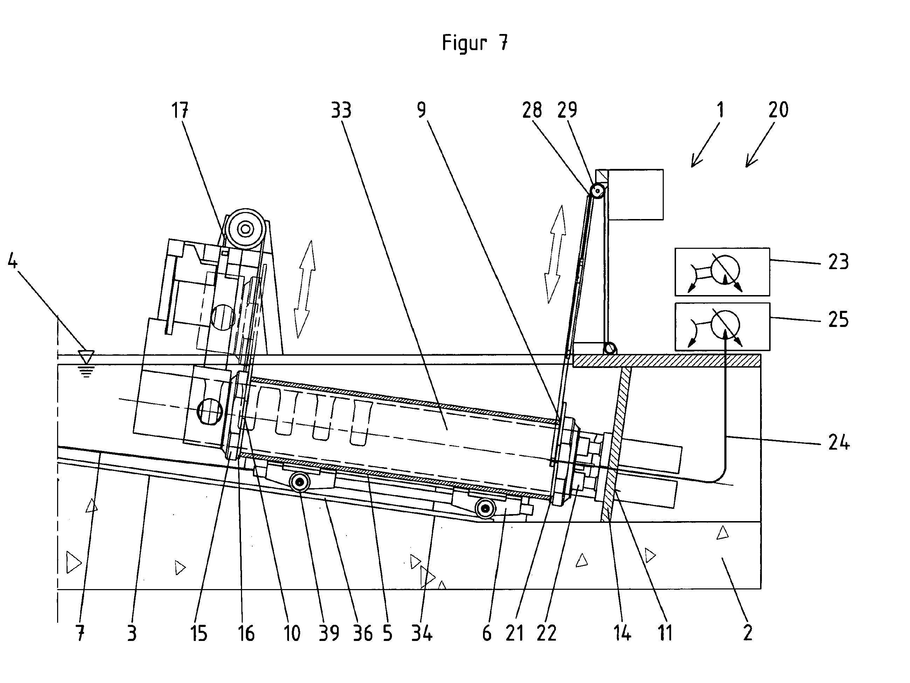

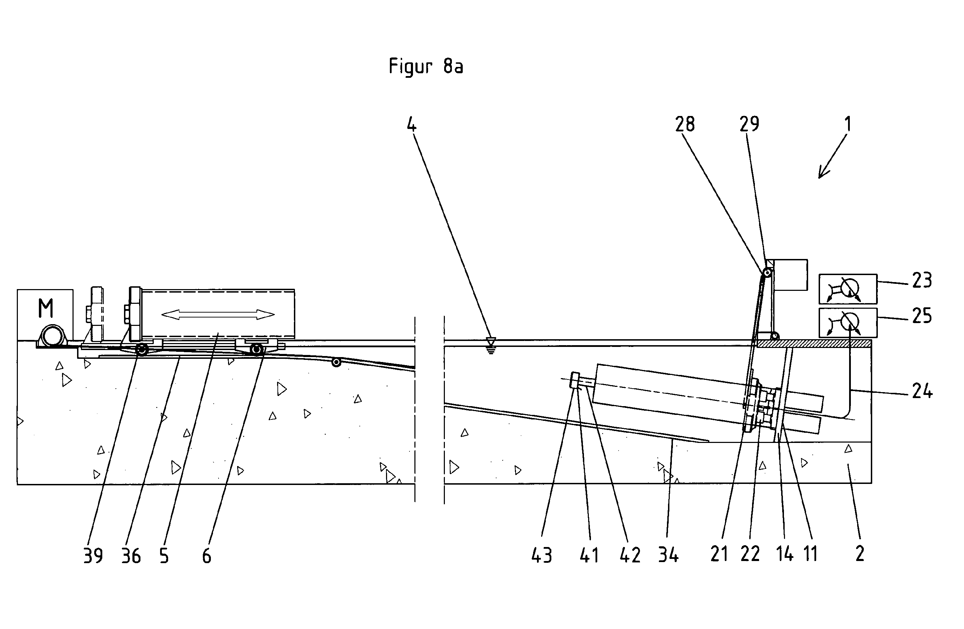

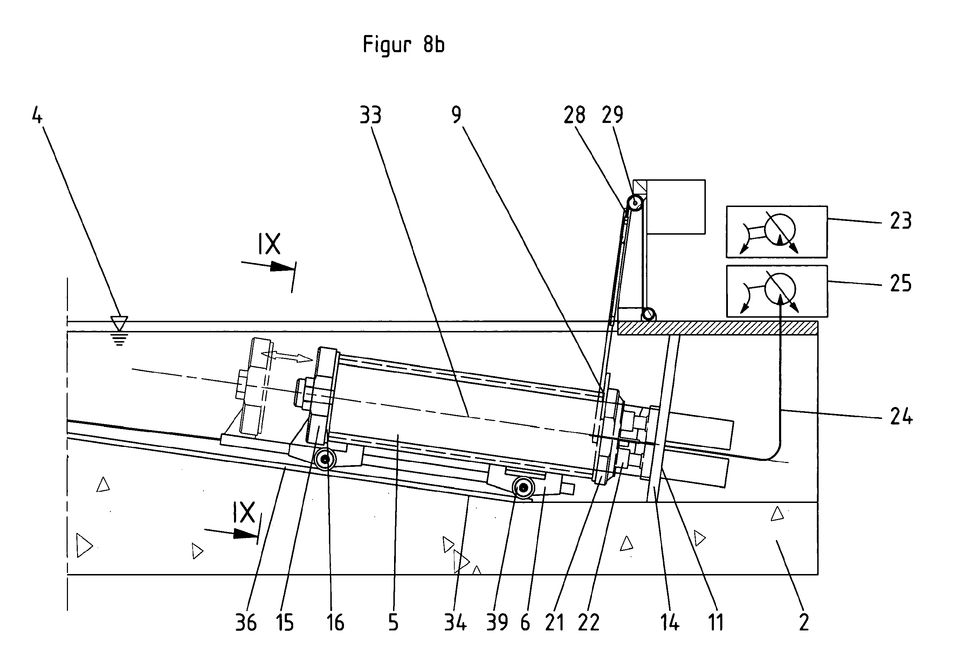

In den Figuren 7, 8a, 8b, 9 und 10 ist eine andersartige Ausgestaltung der Prüf-Vorrichtung 1 zu entnehmen, denn nunmehr soll der Verschlussmechanismus 20 ortsfest im Inneren des Beckens 2 vorgesehen sein. Zu diesem Zweck sind die vier Druckkolben 22 fest mit dem Steg 14 des Aufnahmegestelles 11 verbunden. Die Druckplatte 21 wird mittels des Seilzuges 17 und des Motors 18 zur Abdeckung der offenen Stirnseite 9 von oben eingesetzt.

Um zwischen dem U-förmigen Aufnahmegestell 11 und dem nunmehr der offenen Stirnseite 10 zugeordneten Anschlag 15 einen Formschluss herzustellen, also einen rechteckförmigen geschlossenen Kastenrahmen zu schaffen, sind an den beiden Stirnseiten der Schenkel 12 und 13 Haltezapfen 41 angeformt, die zwei unterschiedliche Durchmesser aufweisen. Die Seite des Haltezapfens 41, die dem Anschlag 15 zugeordnet ist, weist dabei den größer bemessenen Durchmesser auf, als die dem jeweiligen Schenkel 12 bzw. 13 zugewandte Abschnitt des Haltezapfens 41, so dass hierdurch eine Nut 42 und eine senkrecht zu der Längsachse 33 des Rohres 5 verlaufende Anschlagsfläche 43 gebildet ist.

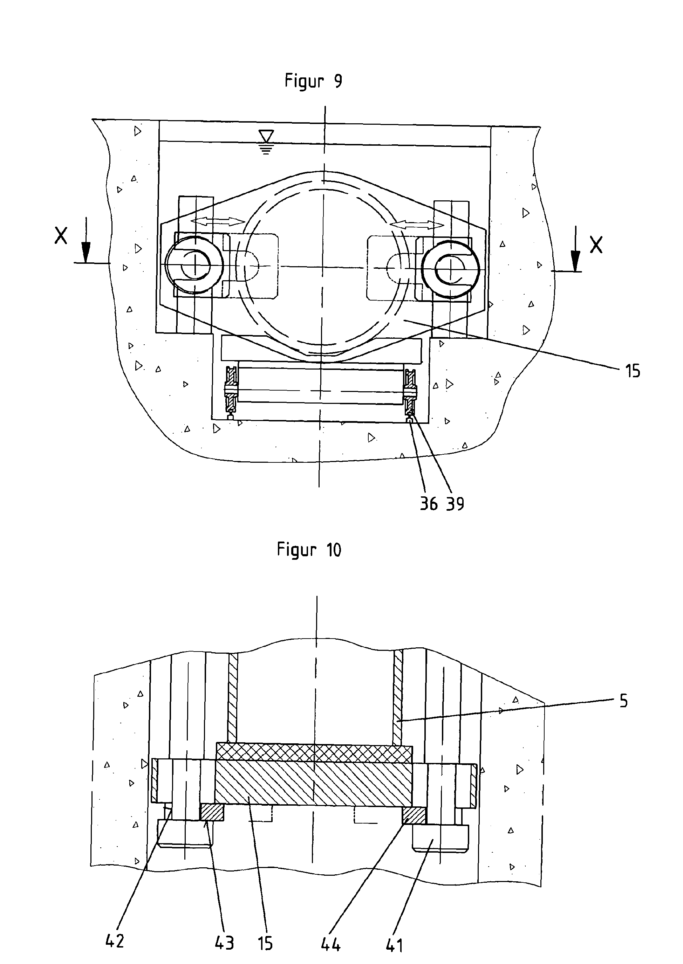

Der Anschlag 15 ist, wie dies insbesondere den Figuren 9 und 10 entnommen werden kann, in Form einer Platte ausgebildet, die in die Nut 42 der Haltezapfen 41 von oben einfährt und somit durch den Anschlag 43 gehalten wird, sobald die Druckkolben 22 eine von der Pumpe 23 erzeugte Anpresskraft ausüben. Folglich wird das Rohr 5 zwischen der Druckplatte 21 und der Druckplatte 16 durch die Druckkolben 22 und dem Anschlag 15 verspannt gehalten und die im Inneren des Rohres 5 wirkende Druckkraft kann von dem Aufnahmegestell 11 aufgenommen werden, es können auch andere formschlüssige Verbindungen eingesetzt werden.

## Patentansprüche

1. Verfahren zur zerstörungsfreien Innendruckprüfung von Hohlkörpern (5), insbesondere von Rohren, mittels einer in dem Inneren des Hohlkörpers (5) eingefüllten Prüfflüssigkeit (4),
**gekennzeichnet durch**
die nachfolgend ablaufenden Verfahrensschritte:
- Einbringen des Hohlkörpers (5) in ein mit der Prüfflüssigkeit (4) gefüllten Becken (2),
- Verschließen der beiden offenen Stirnseiten (9, 10) des jeweiligen Hohlkörpers (5) mit einer Druckplatte (16, 21), nachdem der Hohlkörper (5) vollständig mit Prüfflüssigkeit (4) gefüllt ist,
- Erzeugen eines **durch** die Prüfflüssigkeit (4) ausgeübten Überdruckes im Inneren des Hohlkörpers (5).

2. Verfahren nach Anspruch 1,
**dadurch gekennzeichnet**
**dass** nach dem Befüllen des Hohlkörpers (5) die Prüfflüssigkeit (4) aus dem Becken (2) abgeleitet wird.

3. Verfahren nach Anspruch 1,
**dadurch gekennzeichnet,**
**dass** der jeweilige Hohlkörper (5) mittels eines Fahrgestells (6) über eine in Richtung des Beckens (2) geneigt verlaufende Rampe (3) in dieses eingeschoben wird, oder dass der jeweilige Hohlkörper (5) mittels einer Hebeeinrichtung (37), vorzugsweise mittels eines Kranes, in das Becken (2), vorzugsweise in Richtung der Prüfflüssigkeit (4) geneigt verlaufend, eingetaucht wird.

4. Verfahren nach Anspruch 1,
**dadurch gekennzeichnet,**
**dass** an einer der beiden Druckplatten (16 oder 21) eine Pumpe (25) angeordnet ist, durch die über eine in diese eingearbeitete Prüfleitung (24) in das Innere des Hohlkörpers (5) die Prüfflüssigkeit (4) zur Erzeugung des Überdruckes während des Prüfzyklusses permanent gepumpt wird.

5. Verfahren nach einem der vorgenannten Ansprüche,
**dadurch gekennzeichnet,**
**dass** in dem Becken (2) mehrere Hohlkörper (5) gleichzeitig oder zeitlich zueinander versetzt nach Art eines Fließbandes eingesetzt sind und dass die Reihenfolge der Prüfschritte aufeinander abgestimmt an jedem der in das Becken (2) eingesetzten Hohlkörper (5) durchgeführt wird.

6. Verfahren nach Anspruch 1,
**dadurch gekennzeichnet,**
**dass** eine der Druckplatten (16 oder 21) zwischen einer der beiden Stirnseiten (9 oder 10) des Hohlkörpers (5) und einem in das Becken (2) eingesetzten Aufnahmegestelles (11) von oben oder seitlich zu diesem eingeschoben und durch das Aufnahmegestell (11) und den Hohlkörper (5) verspannt gehalten wird, dass die andere Druckplatte (16 oder 21) mittels eines Verschlussmechanismusses (20) im Bereich der zweiten Stirnseite (9 oder 10) des Hohlkörpers (5) angeordnet wird und dass die Druckplatte (16 oder 21) anschließend durch mindestens einen an dem Verschlussmechanismus (20) angebrachten und parallel zu der Längsachse (33) des Hohlkörpers (5) ausgerichteten Druckkolben (22) auf die offene Stirnseite (9 oder 10) des Hohlkörpers (5) aufgepresst wird.

7. Prüf-Vorrichtung (1) bestehend aus einem mit Prüfflüssigkeit (4) gefüllten Becken (2), in dem ein U-förmig ausgebildetes Aufnahmegestell (11) angeordnet ist, aus einer Förder- (6, 7, 8) oder Hebeeinrichtung (37), durch die ein oder mehrere Hohlkörper (5) in das Aufnahmegestell (11) eingesetzt ist bzw. sind, mit einem an dem Steg (14) des Aufnahmegestelles (11) angeformten und der ersten offenen Stirnseite (9) des Hohlkörpers (5) zugewandten Anschlages (15), durch den die Stirnseite (9) mittels einer Druckplatte (16) flüssigkeitsdicht während des Prüfzustandes verschlossen ist, mit einem Verschlussmechanismus (20), durch die die zweite offene Stirnseite (10) des Hohlkörpers (5) im Prüfzustand mittels einer Druckplatte (21) flüssigkeitsdicht verschlossen ist und die mit dem Aufnahmegestell (11) formschlüssig verbunden ist, und mit einer Pumpe (25), durch die durch den Anschlag (15) oder durch den Verschlussmechanismus (20) Prüfflüssigkeit (4) in das Innere des Hohlkörpers (5) zur Erzeugung eines Überdruckes eingefüllt ist.

8. Prüf-Vorrichtung nach Anspruch 7,
**dadurch gekennzeichnet,**
**dass** dem Becken (2) mindestens eine in Richtung des Beckenbodens (34) geneigt verlaufende Rampe (3) zugeordnet ist und dass jeder Hohlkörper (5) auf einem Fahrgestell (6) aufgesetzt ist, durch das dieses über die Rampe (3) in das Becken (2)einschiebbar ist.

9. Vorrichtung nach Anspruch 8,
**dadurch gekennzeichnet,**
**dass** der Beckenboden (34) aus der Horizontalen geneigt verlaufend ausgerichtet ist und dass die Rampe (3) mit dem Beckenboden (34) verbunden ist.

10. Vorrichtung nach Anspruch 7,
**dadurch gekennzeichnet,**
**dass** jeder Hohlkörper (5) mittels einer Hebeeinrichtung (37), vorzugsweise einem Kran, in oder aus dem Becken (2) bewegt ist.

11. Prüf-Vorrichtung nach einem der Ansprüche 7 bis 10,
**dadurch gekennzeichnet,**
**dass** die die jeweiligen Stirnseiten (9, 10) der Hohlkörper (5) verschließende Druckplatte (16, 21) mit den Durchmessern und/oder den Innenkonturen der Hohlkörper (5) korrespondieren.

12. Prüf-Vorrichtung nach Anspruch 7,
**dadurch gekennzeichnet,**
**dass** der Anschlag (15) als Druckkolben (22) und der Verschlussmechanismus (20) als Anschlag (15) ausgebildet sind und dass durch den oder die Druckkolben (22) der Hohlkörper (5) in Richtung des Anschlages (15) verschoben und auf diesen flüssigkeitsdicht aufgedrückt ist.

13. Prüf-Vorrichtung nach Anspruch 7,
**dadurch gekennzeichnet,**
**dass** die Druckplatte (21) an einem Rahmengestell (26) des Verschlussmechanismusses (20), vorzugsweise in vertikaler Richtung, beweglich gehalten ist.

14. Prüf-Vorrichtung nach Anspruch 7,
**dadurch gekennzeichnet,**
**dass** an dem Rahmengestell (26) des Verschlussmechanismusses (20) zwei Bolzen (27) angeformt sind, die fluchtend zueinander und senkrecht von dem Rahmengestell (26) in Richtung der beiden Schenkel (12, 13) des Aufnahmegestelles (11) verlaufen,
und **dass** die Bolzen (27) in eine in den Schenkeln (12, 13) eingearbeiteten Nuten (19) im montierten Zustand des Verschlussmechanismusses (20) an dem Aufnahmegestell (11) formschlüssig eingreifen.
